# EUROPEAN PATENT APPLICATION

(11) **EP 0 551 942 A2**
(43) Date of publication of application: **21.07.1993**
(21) Application number: 93200059.9
(22) Date of filing: 11.01.1993
(51) Int. Cl.: C09D 167/08, C09D 151/08, C08F 283/02

(54) **Binder comprising an alkyd resin and a resin based on an ethylenically unsaturated monomer**

(30) Priority: 13.01.1992 NL 9200042
(71) Applicant: DSM N.V., NL-6411 TE Heerlen (NL)
(72) Inventor: Hofland, Adriaan, NL-8031 ZH Zwolle (NL); Van der Linde, Robert, NL-8024 PD Zwolle (NL); Bayard, Richard Antonius, NL-8014 JA Zwolle (NL)

(57) **Abstract**

The invention relates to a binder composition, comprising an alkyd resin and a resin based on an ethylenically unsaturated monomer, which is emulsified in water. The binder composition has a bimodal particle size distribution with large and small particles, the small particles consisting substantially of resin particles based on the ethylenically unsaturated monomer, having a number average particle size of between 40 and 150 nm, and the large particles consisting substantially of particles based on alkyd resin, having a number average particle size of between 150 and 500 nm.

Preferably, a mixture of an acrylate monomer and styrene is used as ethylenically unsaturated monomer.

## Description

The invention relates to a binder comprising an alkyd resin and a resin based on an ethylenically unsaturated monomer, which is emulsified in water.

Such binders are described in US-A-4413073. This patent publication describes a process in which in a first step an alkyd resin is dissolved in a methyl methacrylate monomer in the presence of a specific emulsifier, after which the product obtained is introduced into water, while high-shear mixing. This leads to the formation of an emulsion of oil in water with a particle size of for example 2 µm. Then polymerisation takes place. The suspension polymerisation of the monomer takes place in the emulsion droplets already formed, with simultaneous copolymerisation of the reactive emulsifier.

A drawback of the process according to US-A-4413073 is that relatively large particles containing a material of high viscosity are formed, which necessitates the use of softening cosolvents. Often such cosolvents are injurious to health. In addition to this an emulsifier that can be incorporated into the paint system has to be used in order to guarantee the stability of the paint system. With the process described in US-A-4413073 the emulsifier will emit acrolein, which is very harmful (MAC = 0.25 mg/m³), as the alkyd group upon oxidative drying can undergo decomposition besides cross-linking. An incorporable emulsifier can moreover adversely affect the water resistance of the film formed. US-A-4413073 mentions nothing about the conversion in the multipolymer particles, but in view of the presence of fatty acid compounds in the particle in which the polymerisation takes place the degree of conversion will not be high.

The aim of the invention is to provide a binder composition that results in a coating with desirable properties such as a good gloss, good adhesion and good drying behaviour. The coating must also be clear. Another aim of the invention is to provide a method for the preparation of the binder with which the use of cosolvents can be avoided.

The invention is characterised in that the binder composition has a bimodal particle size distribution with large and small particles, the small particles consisting substantially of resin particles based on the ethylenically unsaturated monomer, with a number average particle size of between 40 and 150 nm, and the large particles consisting substantially of particles based on alkyd resin, with a number average particle size of between 150 and 500 nm.

The presence of two populations of particles, the alkyd resin particles of which can serve as (reactive) softener for the resin particles based on ethylenically unsaturated monomers, ensures that the formation of a film is a smooth and complete process. Because of this, a coating with good properties with respect to for example gloss, adhesion, drying behaviour and clarity can be obtained without using a softener or a cosolvent. Because no discontinuities can be observed, a clear film is obtained.

From GB-A-2131437 an aqueous coating composition is known, comprising an aquous resin such as an alkyd resin and water insoluble resin particles, which particles may be obtained by the polymerisation of ethylenically unsaturated compounds. However, the aquous resin has to be solubilized in water through neutralization with basic compounds such as amines. The neutralization with amines has the disadvantage that upon curing the excess of amines evaporates, causing environmental pollution. Moreover, hydrophilic, polar organic solvents have to be added to the binder composition to stabilize the dispersion of the water insoluble resin particles.

From DE-A-3123598 an aqueous binder composition is known, comprising a resin based on an ethylenically unsaturated monomer and an anionic resin. The anionic resin may be a polyester or alkyd resin containing free carboxyl groups. A drawback of the binder composition according to DE-A-3123598 is that the anionic resin has to be solubilized in water through neutralization with basic components such as amines.

In the binder according to the present invention, the presence of mainly alkyd resin in the larger particles and mainly resin based on ethylenically unsaturated monomers, such as acrylate resin, in the smaller particles can be demonstrated by means of sedimentation field flow fractionation (SF3) and transmission electron spectroscopy (TEM) after colouring the alkyd with osmium tetroxide.

According to a preferred embodiment of the invention the small particles are smaller than 100 nm. According to a preferred embodiment of the invention the particle size of the larger particles is between 200 and 400 nm.

The binder composition according to the invention is preferably prepared by first preparing a pre-emulsion containing alkyd resin and ethylenically unsaturated monomer, in the presence of the emulsifiers and initiators usually used for emulsion polymerisation, in water, at temperatures below 100°C. Then the pre-emulsion is passed through emulsifying equipment, after which an emulsion polymerisation is carried out under the usual conditions.

It is also possible to carry out the emulsion polymerisation in a continuous process, for example in a loop reactor.

The alkyd resin/ethylenically unsaturated monomer weight ratio is usually between 10:90 and 90:10, preferably between 20:80 and 50:50.

The (number average) particle size of the pre-emulsion particles before the treatment in the emulsifying equipment is often between 100 and 1000 µm and is often between 100 and 300 nm after treatment in the emulsifying equipment.

During the preparation of the pre-emulsion, before the treatment in the emulsifying equipment, water is added to the solution of the resin in the monomers. The water may also contain anionogenic compounds.

As alkyd resin, which serves as a basis for the pre-emulsion, use may be made of an alkyd resin obtained via the usual methods (see for example pp. 2-14 of Alkyd Resin Technology by F.C. Patton, Intersience Publishers 1962).

The alkyd resin may be a fatty resin with a fatty acid content of more than 60%, a semi-fatty resin with a fatty acid content of between 45 and 60% or a lean resin with a fatty acid content of less than 45%. These possible variations make it possible to select the alkyd resin most suitable for the final applications.

As alkyd resin use may also be made of alkyd resins modified with for example polyacrylates, aromatic monocarboxylic acids, polystyrene, phenolic resins and colophonium resins. Preferably, use is made of aromatic monocarboxylic acids such as benzoic acid and paratertiary butylbenzoic acid.

As ethylenically unsaturated monomers use is preferably made of mixtures of acrylate monomers and styrene.

Suitable acrylate monomers are for example alkyl(meth)acrylates. Preferably use is made of (C₁-C₈) acrylates such as ethylhexylacrylate and butylacrylate.

Other suitable ethylenically unsaturated monomers are for example dialkylmaleates, dialkylfumarates, vinyl esters, such as vinyl acetate, vinyl propionate, vinyl butyrate, vinyl pivalate, vinyl-2-ethylhexoate, vinyl stearate, vinyl laurate, vinyl versatate, vinyl ethers, vinyl chloride, alkenes, such as ethylene, propylene, isobutene, butadiene, vinyl toluene, α-methylstyrene, p-methylstyrene and/or acrylonitrile. Usually use is made of di(C₁-C₈)alkylmaleates and di(C₁-C₈)alkylfumarates, for example diethylhexyl fumarate, and vinyl esters.

As emulsifying equipment use may be made of in-line equipment such as a Nanojet^{R} (Nanojet Engineering GmbH) and a microfluidizer (see for example US-A-4533254 or US-A-4908154). Homogenizers, such as high-pressure homogenizers, membrane sonolators or ultra sonificators, are also suitable emulsifying equipment.

The emulsion polymerisation takes place in the presence of catalysts that are suitable for this reaction, for example persulphates, hydrogen peroxide, peroxides and azo compounds, whether or not combined with reducing agents. The reaction temperature is usually between 20°C and 90°C but may also be between -15°C and 100°C, in which case antifreeze agents will have to be added at temperatures below 0°C. During the polymerisation other compounds, for example chain-length regulators such as mercaptans or buffers such as a bicarbonate, may also be present. In addition, the dispersion may contain emulsion stabilizers and/or emulsifiers in amounts between 0.2 and 10.0 wt.%, preferably between 0.5 and 5.0 wt.%. Preferably, anionic or non-ionic compounds are used as such. Examples of such compounds are salts of alkylcarboxylic acids, alkylsulphates, alkylsulphonates, alkylphosphates, alkylamines, alkylarylsulphonates, alkylpolyethylene glycol ethers, alkylarylpolyethylene glycol ethers. To obtain an optimum emulsifying effect mixtures of non-ionic and anionic compounds are preferably used.

The binders according to the invention preferably result in a clear film, when the difference between the refraction index of the alkyd resin (n_{D,alkyd}) and the refraction index of the resin based on the ethylenically unsaturated monomers (n_{D,resin}), given by the formula |n_{D,alkyd} - n_{D,resin}| is smaller than 0.025. The difference between the said refraction indexes is more preferably smaller than 0.015. The refraction index of the alkyd resin (n_{D,alkyd}) can be determined directly at 20°C. The refraction index of the resin based on the ethylenically unsaturated monomers (n_{D,resin}) has to be calculated theoretically, from the formula 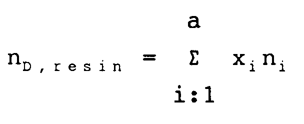
wherein xᵢ is the amount of ethylenically unsaturated monomer i in the resin in % by weight, nᵢ is the refraction index of the homopolymer of the ethylenically unsaturated monomer i at 20°C, and a is the number of different monomers used in the synthesis of the resin based on the ethylenically unsaturated monomers.

The binders according to the present invention appear to have two glass transition temperatures (measured via the tangent delta in mechanical spectrometry), which means that a physical mixture has been formed and that no multipolymer particles have been formed.

The molecular weight of for example the acrylate resin does not differ substantially from the molecular weights usually obtained in emulsion polymerisation (between about 10⁵ and 10⁶ Dalton) because virtually no grafting takes place of the growing acrylate chain onto the alkyd resin.

The degree of conversion of the ethylenically unsaturated monomers is higher than 98%.

The binders obtained may be used for example as a basis for stains and paints in the do-it-yourself and building sectors. The alkyd/acrylate weight ratio is then usually between 25:75 and 75:25.

In the case of alkyd/acrylate weight ratios of between 10:90 and 40:60 the binders can be used for example as a basis for primers for 24-hour systems and dipping primers.

The invention will be illustrated with reference to the following example, without however being limited thereto.

### Examples

### Example I

### Preparation of a hybrid binder

An alkyd resin prepared from the following components:

| | |
|---|---|
| tall oil fatty acid: | 71 parts by weight |
| isophthalic acid: | 19 parts by weight |
| pentaerythritol: | 19 parts by weight |

was esterified at 245°C in the presence of 5 parts by weight xylene until an acid number of 8 mg of KOH/g of resin and a viscosity of 18 dPa.s (as measured with the aid of a rotating-cylinder viscosimeter at 23°C for an 80% solution in xylene) were obtained.

200 parts by weight of this alkyd resin were then dissolved in the following mixture of monomers:

| | |
|---|---|
| styrene: | 112 parts by weight |
| methyl methacrylate: | 180 parts by weight |
| 2-ethylhexylacrylate: | 230 parts by weight |
| butyl methacrylate: | 60 parts by weight |
| methacrylic acid: | 18 parts by weight. |

This solution was pre-emulsified with the aid of a small dissolver disc in a solution of 23 parts by weight nonylphenolpolyethylene oxide phosphoric acid sodium salt (Sermul EA 151^{R}, SERVO) in 787 parts by weight demineralized water. The d(90%) (i.e. that particle size at which 90% of the particles is smaller than the indicated value), determined via Coulter LS 130 (particle size determination via laser beam scattering) of this pre-emulsion was 2-25 µm.

This pre-emulsion was then microfluidized at a pressure of 650 bar in a Microfluidizer M 110 Y. The d(90%), determined via Coulter LS 130, of the emulsion thus obtained was less than 250 nm.

This pre-emulsion was supplied to 1 part by weight sodium persulphate and 5 parts by weight nonylphenolpolyethylene oxide phosphoric acid sodium salt (Sermul EA^{R} 151) in 250 parts by weight demineralized water in 3 hours. The reaction temperature was 80°C. No exotherms were observed.

After 1 hour's supplying a start was made with the supply of a solution of 2 g of sodium persulphate in 28 g of demineralized water.

After all of the pre-emulsion had been supplied the temperature was raised to 90°C. This temperature was maintained for 3 hours.

The degree of conversion of the monomers was 98.7%.

The particle size distribution, measured with the aid of SF3 (sedimentation field flow fractionation, particle size determination by means of centrifugation and chromatography), was bimodal. A population of small particles (that OsO₄ did not colour) had a number average particle size of 45 nm. The population of larger particles (that turned a dark colour on addition of OsO₄) had a number average particle size of 340 nm. The density of the individual particles was determined with the aid of dilution curves so as to be able to determine this number average particle size: the density of the alkyd particles was 1.029 g/ml and the density of the acrylate particles was 1.062 g/ml.

The refraction index of the alkyd resin (n_{D,alkyd}) determined at 20°C, was 1.507. The calculated refraction index of the resin based on ethylenically unsaturated monomers (n_{D,resin}) was 1.495. The difference between the said refraction indices |n_{D,alkyd} - n_{D,resin}| was 0.012.

A film was drawn from this dispersion, which film was completely clear. The gloss was 92% at 60° (ASTM-C-584) and 75% at 20° (ASTM-D-1834).

### Comparative example 1: Influence of preparation procedure

An alkyd resin as described in Example I was emulsified in water using 1.5 wt.% nonylphenolpolyethylene oxide phosphoric acid sodium salt (Sermul EA 151) in a high-shear mixer. The solids content was the same as that in Example I: 50%. The d(90%) (determined via Coulter LS 130) was 450 nm.

Then an acrylate dispersion was prepared using the monomer mixture as described in Example I.
The solids content was 50%. The d(90%) (determined via Coulter LS 130) was 123 nm.

These two dispersions were mixed in a 25/75 (alkyd/acrylate) weight ratio. A hazy film was drawn from this mixture. The gloss was 80% at 60° and 63% at 20°. In addition, this mixture was found to be non-stable during storage at 50°C.

### Comparative example 2: Influence of refraction index

200 parts by weight of the alkyd resin as described in Example I were dissolved in the following mixture of monomers:

| | |
|---|---|
| butylacrylate | 291 parts by weight |
| methylmethacrylate | 291 parts by weight |
| acrylic acid | 18 parts by weight |

The procedure was continued as described in Example I.

The refraction index of the alkyd resin (n_{D,alkyd}) was 1.507. The calculated refraction index of the resin based on the ethylenically unsaturated monomers (n_{D,resin}) was 1.479. The difference between the said refraction indices |n_{D,alkyd}-n_{D,resin}| was 0.028.

A film was drawn from the dispersion which film as hazy. The gloss was 79% at 60° and 46% at 20°.

## Claims

1. Binder composition comprising an alkyd resin and a resin based on an ethylenically unsaturated monomer, which is emulsified in water, characterised in that the binder composition has a bimodal particle size distribution with large and small particles, the small particles consisting substantially of resin particles based on the ethylenically unsaturated monomer, having a number average particle size of between 40 and 150 nm, and the large particles consisting substantially of particles based on alkyd resin, having a number average particle size of between 150 and 500 nm.

2. Binder composition according to conclusion 1, characterized in that the difference between the refraction index of the alkyd resin (n_{D,alkyd}) and the refraction index of the resin based on ethylenically unsaturated monomers (n_{D,resin}) given by the formula |n_{D,alkyd} - n_{D,resin}| is smaller than 0.025.

3. Binder composition according to any one of claims 1-2, characterised in that the small particles are smaller than 100 nm.

4. Binder composition according to any one of claims 1-2, characterised in that the particle size of the large particles is between 200 and 400 nm.

5. Binder composition according to any one of claims 1-4, characterised in that a mixture of an acrylate monomer and styrene is used as ethylenically unsaturated monomer.

6. Process for the preparation of a binder composition according to any one of claims 1-5, characterised in that first a pre-emulsion containing alkyd resin and ethylenically unsaturated monomer is prepared at temperatures below 100°C, that the pre-emulsion is then passed through emulsifying equipment, and that the emulsion polymerisation is carried out after that.

7. Process according to claim 6, characterised in that the alkyd resin/ethylenically unsaturated monomer weight ratio is between 10:90 and 90:10.

8. Use of a binder composition according to any one of claims 1-5 or of a binder composition obtained according to the process according to claim 5 or claim 6 in coating compositions.

9. Coating based on a binder composition according to any one of claims 1-5 or on a binder composition obtained according to any one of claims 6-8.

10. Substrate entirely or partly covered with a coating according to claim 9.
